# FASCICULE DE BREVET EUROPEEN

(11) **EP 1 202 034 B1**
(45) Date de publication et mention de la délivrance du brevet: **23.01.2008**
(21) Numéro de dépôt: 01402442.6
(22) Date de dépôt: 24.09.2001
(51) Int. Cl.: G01J 5/06, B64G 1/50, B64G 1/66, F25B 23/00

(54) **Refroidisseur passif à double cône à base elliptique**
Passiver Kühler mit Doppelkegel mit elliptischer Basis
Passive cooler with double cone with elliptic base

(30) Priorité: 31.10.2000 FR 0013999
(43) Date de publication de la demande: 02.05.2002
(73) Titulaire: THALES, 92200 Neuilly sur Seine (FR)
(72) Inventeur: Vieillot, Jacques, 06150 Cannes La Bocca (FR)
(74) Mandataire: Esselin, Sophie

(56) Documents cités:
- FR-A- 2 682 931
- US-A- 3 310 102
- US-A- 3 899 674
- PETERSEN H ET AL: "PASSIVE CRYOGENIC COOLER FOR MSG SEVIRI DESIGN AND PERFORMANCE" EUROPEAN SYMPOSIUM ON SPACE ENVIRONMENTAL CONTROL SYSTEMS,XX,XX, vol. 2, 20 mai 1997 (1997-05-20), pages 523-531, XP000998244

## Description

L'invention concerne le domaine des satellites, et plus spécifiquement les refroidisseurs utilisés dans les satellites en rotation géostationnaires. On appelle ici satellites en rotation (ou satellites spinnés) des satellites ayant un mouvement de rotation sur eux-mêmes, outre leur mouvement éventuel sur leur orbite.

Les équipements embarqués sur un satellite, comme un détecteur de radiations, doivent être protégés à la fois contre le rayonnement solaire et contre le rayonnement infrarouge provenant de surfaces à haute température - typiquement 300 K. Il a été proposé d'utiliser des refroidisseurs actifs; de tels concepts sont toutefois demandeurs de puissance électrique. Ils sont aussi peu adaptés à des satellites spinnés, du fait des contraintes de faisabilité pour l'environnement mécanique qu'entraîne la rotation du satellite. On peut couramment rencontrer dans des satellites en rotation des niveaux d'accélération dynamique de l'ordre de 10 à 15 g, i.e. de 98,1 à 147,15 ms⁻². Enfin, la fiabilité de tels refroidisseurs actifs est limitée et ne peut être améliorée qu'en assurant une redondance des équipements thermiques; cette solution entraîne une masse plus importante.

Il a donc été proposé d'utiliser des refroidisseurs passifs. US-A-4 820 923 décrit un refroidisseur passif pour un détecteur de radiations refroidi cryogéniquement, qui présente une surface réflective toroïdale. Plus précisément, le détecteur est disposé au fond d'un tube dont les parois sont munies de segments de réflecteurs toroïdaux; GB-A-2 115 143 propose un détecteur de même type. US-A-4 775 792 décrit une autre forme de réflecteur, adaptée à la protection d'une bande de détecteurs infrarouges. US-A-4 150 552 décrit un ensemble composé d'un condenseur et d'un puits de radiation disposé au voisinage du détecteur à refroidir; ce document mentionne différents traitements de surface des matériaux. . US-A-4 121 434 propose un dispositif de protection pour un radiomètre à haute résolution. Le dispositif comprend un premier étage conique avec un bouclier monté sur charnière, et un deuxième étage cylindrique disposé au fond du cône. US-A-4 030 316 décrit un refroidisseur passif à trois étages, pour le refroidissement d'un détecteur infrarouge. Le premier étage est tronconique et réfléchit l'énergie solaire en une seule réflexion. Le deuxième étage est aussi tronconique et se trouve à l'intérieur du premier étage. Le troisième étage est cylindrique et se trouve disposé au fond du deuxième étage. US-A-3 422 886 montre encore un refroidisseur passif, avec dans un exemple une structure formée de plusieurs cônes emboîtés les uns dans les autres. JP-A-4- 323525 décrit un refroidisseur formé d'un vase Dewar en contact avec un réservoir de refroidissant. Dans le vase est disposé un miroir en forme d'ellipsoïde de révolution. L'ensemble du dispositif présente une symétrie de révolution.

Un refroidisseur à double cône circulaire a été utilisé pour les satellites MétéoSat de première génération (MOP). Le refroidisseur comprend un pare-soleil, dont la fonction est de protéger les étages froids du refroidisseur des entrées directes et indirectes (par réflexion sur le pare-soleil; le pare-soleil présente une forme tronconique, avec un radiateur plan dans le fond du tronc de cône. Le refroidisseur comprend aussi un déflecteur infrarouge, de forme conique, qui est disposé au fond du pare-soleil, au milieu du radiateur de pare-soleil. La fonction de ce réflecteur est de protéger le radiateur de l'étage détecteur de toute radiation directe infrarouge provenant du pare-soleil : l'essentiel du rayonnement infrarouge provenant du pare-soleil est réfléchi sur les parois du déflecteur et est renvoyé vers l'extérieur, après une ou plusieurs réflexions. Enfin, le refroidisseur comprend un radiateur implanté à la base du déflecteur; les détecteurs sont disposés sur la face arrière de ce radiateur.

Matra Marconi Space a utilisé pour le refroidisseur de l'instrument Seviri du satellite MétéoSat de deuxième génération un refroidisseur du même genre, mais dans lequel le déflecteur infrarouge est en forme d'ellipsoïde de révolution, à base circulaire. L'ensemble du refroidisseur présente encore une symétrie de révolution. Par rapport à un refroidisseur à double cône, cette solution permet d'augmenter légèrement les dimensions du radiateur implanté à la base du déflecteur, toutes choses égales par ailleurs.

Un refroidisseur à simple cône circulaire a été proposé à l'ESA par Matra Marconi Space dans le cadre de la phase A du projet MétéoSat de deuxième génération. Ce dispositif utilise comme le refroidisseur à double cône un pare-soleil; il comprend aussi deux radiateurs plans aménagés à la base du pare-soleil. Le problème avec un tel dispositif est que le radiateur n'est pas protégé des radiations infrarouges provenant du pare-soleil. Il en résulte une augmentation importante des charges thermiques sur le radiateur, ce qui réduit les performances en température sur l'étage détecteur.

L'invention concerne le problème des performances des refroidisseurs passifs; en outre, comme pour tous les équipements montés sur les satellites se pose le problème de masse et d'encombrement de l'équipement.

Elle propose un nouveau refroidisseur passif, qui présente des performances thermiques améliorées et permet une meilleure utilisation de l'espace disponible.

Plus précisément, l'invention propose un refroidisseur passif pour satellite, comprenant un pare-soleil et un radiateur formant le fond du pare-soleil; le pare-soleil présente une base elliptique et une surface formant un angle constant avec l'axe du refroidisseur.

De préférence, le refroidisseur comprend en outre un déflecteur infrarouge au fond du pare-soleil et un radiateur formant le fond du déflecteur. Ce déflecteur peut aussi présenter une base elliptique.

Dans un cas comme dans l'autre, le rapport entre le grand axe et le petit axe de la base elliptique est avantageusement supérieur ou égal à 1,1, voire supérieur à 1,3.

Il est possible de prévoir des radiateurs sur la face extérieure du pare-soleil.

Dans un mode de réalisation, un rayon incident au voisinage du bord du pare-soleil et dirigé vers le fond du pare-soleil de l'autre côté de celui-ci ne pénètre pas dans le déflecteur.

Il est encore avantageux qu'un rayon infrarouge émis par le pare-soleil et pénétrant dans le déflecteur sorte du déflecteur après au moins une réflexion sur la paroi du déflecteur.

Dans un mode de réalisation, l'angle entre l'axe du refroidisseur et la paroi du pare-soleil est supérieur à 23,5°; l'angle entre l'axe du refroidisseur et la paroi du déflecteur est voisin de 10°.

L'invention propose aussi un satellite comprenant un tel refroidisseur; le satellite peut être géostationnaire et est animé d'un mouvement de rotation sur lui-même.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique en perspective d'un refroidisseur selon l'invention;
- figure 2, une vue de côté du refroidisseur de la figure 1;
- figure 3, une vue schématique en coupe du refroidisseur de la figure 1;
- figure 4, une vue schématique du cheminement d'un rayon passant par l'axe dans un cône à base elliptique;
- figure 5 une vue schématique du cheminement d'un rayon ne passant pas par l'axe dans un cône à base elliptique.

L'invention propose, dans un refroidisseur passif à double cône, d'utiliser non pas des cônes circulaires, mais des surfaces présentant une base elliptique; cette solution permet une meilleure utilisation du volume alloué au refroidisseur, un gain de surface pour le radiateur de l'étage détecteurs et donc une performance thermique améliorée.

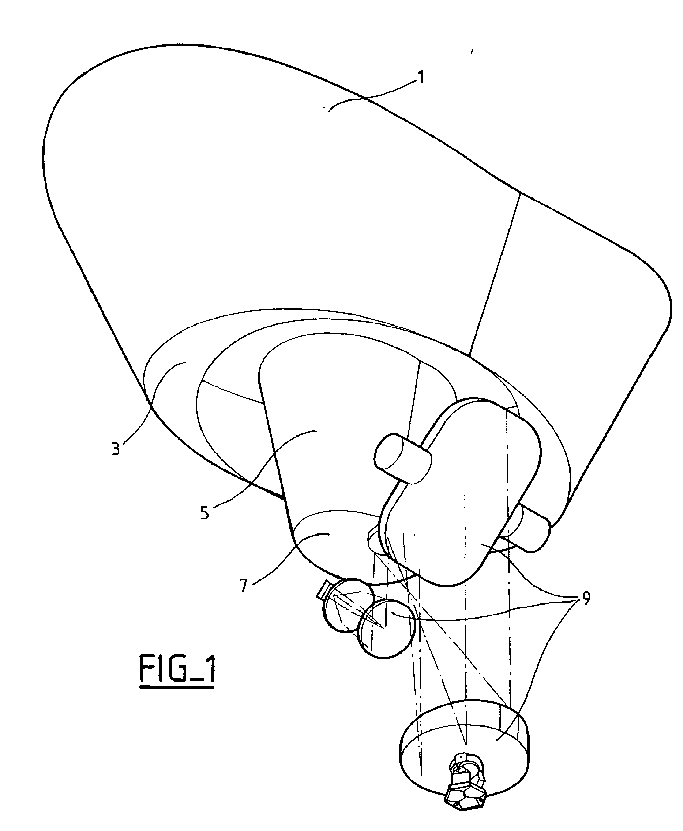

La figure 1 montre une représentation schématique en perspective d'un refroidisseur selon l'invention; on reconnaît sur la figure le pare-soleil 1. Celui-ci a pour fonction, comme dans le cas d'un refroidisseur classique à double cône, de protéger les étages froids du refroidisseur - réflecteur infrarouge et son radiateur - des rayonnements solaires entrant directement dans le refroidisseur, ou qui sont réfléchis par le pare-soleil.

Comme le montre la figure, l'invention propose que le pare-soleil présente une base elliptique et une surface formant avec l'axe du réflecteur un angle constant. Autrement dit, le pare-soleil peut être généré par le déplacement le long d'une ellipse d'une droite perpendiculaire à la tangente de l'ellipse, et qui forme avec le plan de l'ellipse un angle constant. Alternativement, l'axe du refroidisseur étant perpendiculaire au plan de l'ellipse, l'angle entre l'axe du refroidisseur et la surface est constant. On comprend que le pare-soleil présente ainsi une surface développable, ce qui en facilite la fabrication. La réflexion des rayons par le pare-soleil est explicitée en référence aux figures 4 et 5.

Dans le fond du pare-soleil est prévu un radiateur 3. Ce radiateur présente une forme elliptique et définit la base du pare-soleil. Il contribue à réfléchir les rayons solaires et est couplé conductivement au pare-soleil et/ou à la structure porteuse du refroidisseur.

Dans l'axe du pare-soleil, au voisinage du centre du pare-soleil est prévu un déflecteur 5 infrarouge. La fonction principale de ce déflecteur est de protéger le radiateur de l'étage inférieur de toute radiation infrarouge directe provenant du pare-soleil. Ce déflecteur présente aussi une base elliptique; à l'inverse du pare-soleil, sa surface ne fait pas nécessairement un angle constant avec l'axe du refroidisseur. Comme le pare soleil 1; il rejette vers l'extérieur après des réflexions successives sur la paroi interne l'essentiel du rayonnement infrarouge provenant du pare-soleil, comme représenté sur les figures 4 et 5.

Au fond du déflecteur 5 est disposé un radiateur 7, qui supporte les détecteurs 9 sur sa face arrière, c'est-à-dire sur sa face opposée à l'intérieur du déflecteur. Les détecteurs sont représentés schématiquement sur la figure, et ne sont pas décrits plus en détail. Ne sont pas non plus décrits plus en détail les différents dispositifs qui peuvent être installés au voisinage des détecteurs, tels que réchauffeurs et capteurs de température; ces dispositifs peuvent être utilisés pour réguler l'étage détecteur à la température requise dans des conditions d'environnement froides, et par exemple en l'absence de flux solaire sur le pare-soleil, en cas de températures minimales aux interfaces avec le satellite et la partie chaude du sondeur. On notera que ces dispositifs ne changent pas la nature du refroidisseur, qui reste un refroidisseur passif.

L'invention présente les avantages suivants, par rapport à un refroidisseur à double cône à base circulaire. Le refroidisseur de l'invention peut être implanté comme le refroidisseur de l'état de la technique dans un satellite spinné, du fait de sa simplicité et de sa robustesse; toutefois, à l'inverse du refroidisseur de l'état de la technique, il peut être implanté dans un volume qui n'est pas cubique ou à base carrée; ainsi, le refroidisseur de l'invention permet une meilleure occupation de l'espace disponible. A titre de comparaison, les dimensions du refroidisseur à base circulaire sont limitées par les contraintes d'aménagement suivant l'axe X, c'est-à-dire suivant un axe contenu dans le plan du radiateur du déflecteur; il peut donc arriver que le refroidisseur soit plus petit - dans le plan du radiateur - que l'espace disponible. L'invention repose sur la constatation de ce nouveau problème, et propose une solution qui permet au refroidisseur d'utiliser pleinement le volume disponible. Dans un volume donné, le refroidisseur de l'invention présente une dimension de petit axe d'ellipse qui correspond au diamètre du refroidisseur de l'état de la technique; on comprend que le volume du refroidisseur de l'invention est plus important, en proportion du rapport entre la surface de l'ellipse et la surface d'un cercle inscrit dans cette ellipse. Dans un exemple de contrainte d'aménagement, le demandeur a constaté que la surface de radiateur d'un refroidisseur selon l'invention était plus importante de l'ordre de 40% par rapport à la surface de radiateur d'un refroidisseur de l'état de la technique. On obtient de la sorte un gain thermique dans la même proportion : le pouvoir de réjection du radiateur augmente. En outre, le refroidisseur de l'invention est mieux adapté à un aménagement périphérique de l'instrument, à l'extérieur du tube central du satellite.

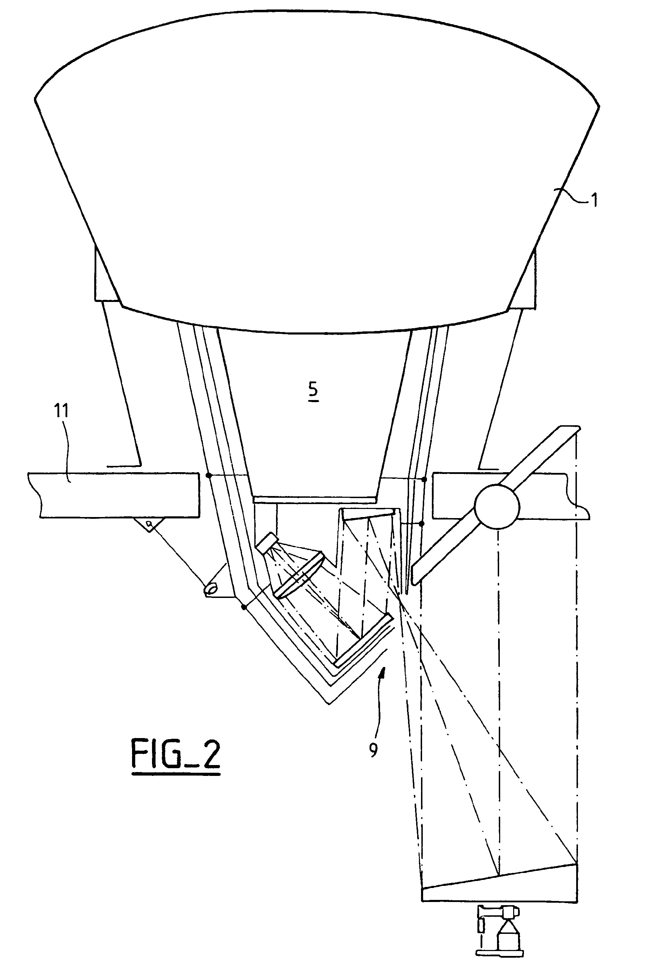

La figure 2 montre une vue de côté d'un refroidisseur selon l'invention. On reconnaît sur la figure le pare-soleil 1, le déflecteur 5 et les détecteurs 9. La figure 2 montre en outre la paroi 11 du tube central du satellite. On notera, comme expliqué plus bas, que le pare-soleil n'est pas fixé directement sur la paroi du satellite dans l'exemple de la figure 2. La figure ne montre que schématiquement les suspensions assurant la cohésion mécanique des différents éléments du refroidisseur, et qui en tant que tels sont connus de l'homme du métier; ces suspensions assurent de préférence un bon découplage conductif entre le pare-soleil et le déflecteur, et entre le déflecteur et les détecteurs. On utilise de préférence pour ces suspensions des matériaux à faible conductivité thermique, et des revêtements à faible émissivité.

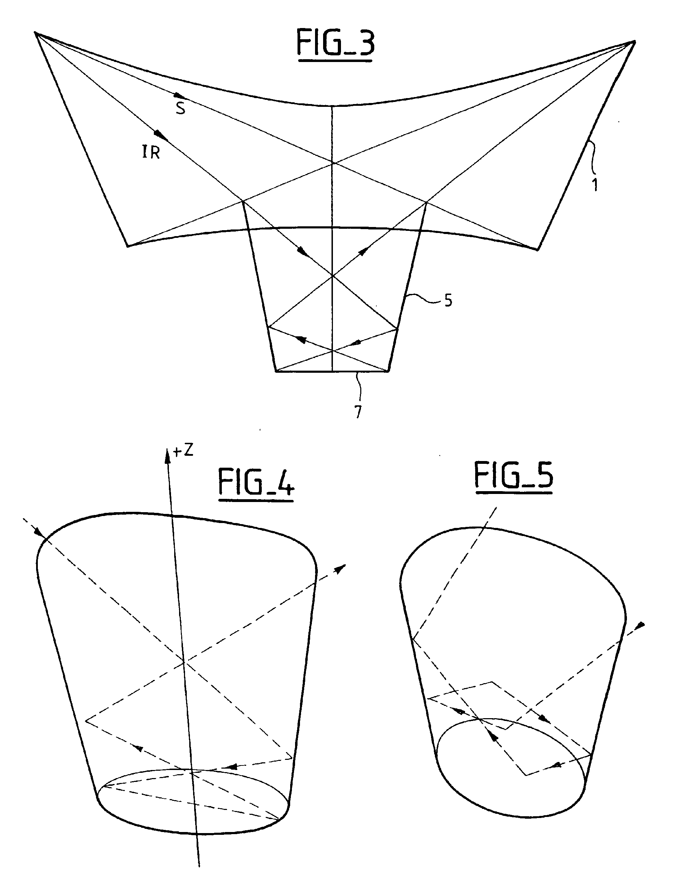

La figure 3 montre une vue schématique en coupe du refroidisseur de la figure 1. On reconnaît sur la figure le pare-soleil 1 et le déflecteur 5. La construction géométrique du refroidisseur de l'invention peut s'effectuer comme le montre la figure 3. Plus spécifiquement, la position du déflecteur dans le pare-soleil est choisie de sorte à ce qu'un rayon incident dans le pare-soleil, au ras du bord extérieur du pare-soleil, atteigne le fond du pare-soleil sans pénétrer dans le déflecteur, et soit donc réfléchi directement par le pare-soleil. Un tel rayon est dessiné sur la figure 3, et porte la référence S. Ceci assure un fonctionnement optimal du pare-soleil : les rayons incidents qui ne pénètrent pas directement dans le déflecteur sont réfléchis par le pare-soleil.

La forme du déflecteur infrarouge est choisie de sorte à réfléchir les rayons infrarouges provenant du pare-soleil. La figure montre avec la référence IR le cas d'un rayon infrarouge présentant une incidence maximale : le rayon est issu du bord extérieur du pare-soleil, passe par l'axe du refroidisseur et est incident sur le bord extérieur du déflecteur. On entend par axe du refroidisseur une droite perpendiculaire au plan du radiateur 7 installé au fond du déflecteur infrarouge, et qui est à l'intersection des grand et petit axe de l'ellipse que constitue la base de ce radiateur. La géométrie du réflecteur est choisie de telle sorte que le rayon se réfléchisse une première fois sur la paroi du déflecteur, une deuxième fois au voisinage du bord inférieur du déflecteur, passe parallèlement au radiateur, et ressorte après une réflexion au voisinage du bord inférieur du déflecteur et une quatrième réflexion sur la paroi du réflecteur. La figure 4 montre une vue à plus grande échelle du trajet de ce rayon. Un trajet en quatre réflexions dans le déflecteur assure un optimum de surface du radiateur; autrement dit, si l'on utilise pour les rayons passant par l'axe du type de la figure 4 un nombre de réflexion plus important, la surface du radiateur du déflecteur diminue.

Ce nombre optimal de réflexions dépend en fait des contraintes sur les grand et petit axes, ainsi que sur la hauteur. Pour des contraintes données, la forme du déflecteur est calculée de sorte à maximiser la surface du radiateur 7. Le nombre de réflexions peut varier. Plus précisément, comme indiqué plus haut, l'angle entre la surface du déflecteur et l'axe du refroidisseur n'est pas nécessairement constant; comme le déflecteur est une pièce plus petite que le pare-soleil, il est possible qu'elle présente une forme gauche et plus complexe à réaliser que le pare-soleil; ceci permet d'augmenter la performance en terme de gain sur le radiateur 7. La forme exacte du déflecteur peut être calculée par optimisation, en cherchant à maximiser la surface du radiateur 7. Dans le cas de quatre réflexions, on obtient par optimisation une surface qui présente avec l'axe du refroidisseur un angle voisin de 10°, plus précisément entre 9,5 et 11,1°; pour trois réflexions, on trouverait une valeur d'angle voisine de 15°.

La figure 5 montre une vue du trajet d'un rayon infrarouge quelconque. Le rayon est réfléchi après six réflexions, sans toucher le radiateur.

On comprend donc que les dimensions extérieures du pare-soleil sont imposées par les contraintes d'aménagement dans le satellite, et notamment la position du radiateur de l'étage détecteurs, la hauteur totale allouée au refroidisseur, et les dimensions allouées dans le plan des radiateurs; l'angle du pare-soleil et du déflecteur se déduit ensuite de l'analyse des rayons, telle qu'elle est schématisée aux figures 3 à 5; le nombre de réflexions admises pour un rayon incident détermine la forme du réflecteur et du pare-soleil.

L'angle entre la surface du pare soleil et l'axe du refroidisseur dépend de l'angle d'incidence maximal du soleil sur le refroidisseur. Il est de préférence supérieur à l'angle d'incidence maximal du soleil, tout en restant aussi proche que possible de celui-ci. La différence entre l'angle entre la surface du pare soleil et l'axe du refroidisseur d'une part et l'angle d'incidence maximal d'autre part dépend des tolérances de fabrication ainsi que des tolérances sur le contrôle d'attitude du satellite. En pratique, pour un angle d'incidence maximal du soleil de 23,5°, on peut prévoir un angle entre la surface du pare soleil et l'axe du refroidisseur inférieur à 25 ou 26°.

Dans tous les modes de réalisation de l'invention, on entend par "ellipse" non seulement l'ellipse au sens mathématique du terme, mais aussi les courbes mathématiques proches, comme celle obtenues par déformation d'un cercle centré sur l'origine dans une transformation qui à tout point de coordonnées (x, y) associe un point de coordonnées (ax, y), avec a un réel différent de 1. Dans tous les cas, on peut définir un grand axe, et un petit axe, qui sont respectivement les droites passant par les points les plus éloignés et les plus proches de la courbe. On comprend que les avantages de l'invention peuvent aussi être obtenus avec des courbes qui ne sont pas rigoureusement des ellipses, mais qui assurent les mêmes propriétés de réflexion des rayons.

De préférence, le rapport entre le grand axe et le petit axe est supérieur à 1,1, voire supérieur à 1,3. Ce rapport assure une bonne utilisation de l'espace disponible.

On détaille maintenant différentes caractéristiques optionnelles préférées du refroidisseur. Le pare-soleil présente comme on l'a vu un angle avec l'axe du refroidisseur supérieur à 23,5°. Le pare-soleil présente sur sa face interne un revêtement intérieur avec un fort taux de spécularité; ceci assure une bonne réflexion des rayons solaires. Pour minimiser l'émission d'infrarouges vers le déflecteur infrarouge, il est aussi intéressant d'utiliser un revêtement à faible absorptivité sur la face inférieure du pare-soleil. On peut notamment utiliser sur la face intérieure du pare-soleil un revêtement VDA (aluminium déposé sous vide, ou "Vacuum Deposited Aluminum" en langue anglaise), qui présente une spécularité forte, une faible émissivité, et une absorptivité faible

On peut aussi relier le pare-soleil par sa face extérieure à des éléments radiateurs externes pour diminuer sa température. Ceci est particulièrement adapté au haut du pare-soleil, c'est-à-dire à la partie du pare-soleil la plus éloignée du radiateur. Il est aussi possible de découpler radiativement la face arrière de l'ensemble constitué par le pare-soleil et ses radiateurs de l'environnement interne du satellite et du refroidisseur; ceci a pour effet de diminuer encore les radiations émises par le pare-soleil. Enfin, il est avantageux de découpler conductivement le pare-soleil et ses éventuels éléments radiateurs de la structure qui le supporte; ceci évite tout échauffement du pare-soleil par l'effet de la conduction thermique.

Comme le montre schématiquement la figure 2, le pare-soleil est fixé à la structure du sondeur. On peut aussi fixer le pare-soleil directement sur la structure du satellite 11. Dans tous les cas de figure, on assure un découplage conductif entre le pare-soleil et la structure porteuse. Le montage de la figure 2 a pour effet de réduire les marges sur les dimensions des éléments du refroidisseur, qui sont liées aux tolérances de fabrication; la performance du refroidisseur en devient optimisée.

Pour ce qui est du radiateur 3 de fond du pare-soleil, on peut utiliser une peinture blanche ou noire, ou encore des OSR (réflecteurs solaires optiques, ou "Optical Solar Reflectors" en langue anglaise). Ce dernier type de revêtement assure au radiateur une forte émissivité ainsi qu'une faible absorptivité solaire.

Le déflecteur infrarouge peut être muni du même revêtement interne que le pare-soleil, pour les mêmes raisons. Sur la face arrière du pare-soleil ou du déflecteur, on peut prévoir des revêtements isolants tels des isolants à couches multiples ou des revêtements à faibles émittivité. On peut aussi prévoir des radiateurs.

Les écrans internes dans le refroidisseur peuvent être revêtus d'un matériau présentant une forte spécularité, et une émissivité faible, tel le VDG (or déposé sous vide, ou "Gold Deposited Aluminum" en langue anglaise ). Lorsque le refroidisseur est utilisé pour un spectromètre, on notera toutefois que les faces en vue directe du spectromètre sont avantageusement peintes en noir pour des raisons optiques.

L'invention propose aussi un satellite présentant un tel refroidisseur passif. Le satellite est par exemple un satellite géostationnaire spinné. Dans ce cas, le refroidisseur peut être implanté sur une face Nord ou Sud du satellite, pour bénéficier des conditions d'incidence solaire optimales, et éviter toute insolation directe du radiateur des détecteurs à travers le déflecteur infrarouge. L'invention permet d'obtenir pour un tel type de refroidisseur des pouvoirs de réjection de l'ordre de
95 mW pour une température de fonctionnement des détecteurs de 90 K;
145 mW pour une température de fonctionnement des détecteurs de 100 K;
210 mW pour une température de fonctionnement des détecteurs de 110 K;

Plus généralement, le refroidisseur est approprié à tout satellite avec une incidence solaire faible et une rotation du soleil autour de l'axe du refroidisseur implanté sur le satellite.

Bien entendu, la présente invention n'est pas limitée aux exemples et modes de réalisation décrits et représentés, mais elle est susceptible de nombreuses variantes accessibles à l'homme de l'art. On pourrait ainsi utiliser dans un refroidisseur passif à simple cône une surface à base elliptique comme le propose l'invention; comme dans le cas du refroidisseur à double cône, on obtient une meilleure occupation du volume alloué au refroidisseur, et un meilleur rendement thermique. On pourrait aussi utiliser un refroidisseur avec un pare soleil elliptique dans le dispositif de l'état de la technique qui présente un déflecteur en forme d'ellipsoïde.

## Revendications

1. Un refroidisseur passif pour satellite, comprenant un pore-soleil (1), un radiateur (3) formant le fond du pare-soleil, **caractérisé en ce que** le pare-soleil (1) présente une base elliptique dans un plan et une surface générée par le déplacement le long de ladite ellipse d'une droite perpendiculaire à la tangente de l'ellipse, cette droite formant avec le plan de l'ellipse un angle constant.

2. Le refroidisseur de la revendication 1, **caractérisé en ce qu**'il comprend en outre un déflecteur infrarouge (5) au fond du pare-soleil et un radiateur (7) formant le fond du déflecteur.

3. Le refroidisseur de la revendication 2, **caractérisé en ce que** le déflecteur infrarouge (5) présente une base elliptique.

4. Le refroidisseur de la revendication 1, 2 ou 3, **caractérisé en ce que** le rapport entre le grand axe et le petit axe de la base elliptique est supérieur ou égal à 1,1, voire supérieur à 1,3.

5. Le refroidisseur de l'une des revendications 1 à 4, **caractérisé en ce que** le pare-soleil présente sur sa face extérieure des radiateurs.

6. Le refroidisseur de l'une des revendications 2 à 5, **caractérisé en ce qu**'un rayon incident au voisinage du bord du pare-soleil et dirigé vers le fond du pare-soleil de l'autre côté de celui-ci ne pénètre pas dans le déflecteur.

7. Le refroidisseur de l'une des revendications 2 à 6, **caractérisé en ce qu'**un rayon infrarouge émis par le pare-soleil et pénétrant dans le déflecteur sort du déflecteur après au moins une réflexion sur la paroi du déflecteur.

8. Le refroidisseur de l'une des revendications 1 à 7, **caractérisé en ce que** l'angle entre l'axe du refroidisseur et la paroi du pare-soleil est supérieur à 23,5°.

9. Le refroidisseur de l'une des revendications 2 à 8, **caractérisé en ce que** l'angle entre l'axe du refroidisseur et la paroi du déflecteur est voisin de 10°.

10. Un satellite comprenant un refroidisseur selon l'une des revendications 1 à 9.

11. Le satellite de la revendication 10, **caractérisé en ce qu**'il est géostationnaire.

12. Le satellite de la revendication 10 ou 11, **caractérisé en ce qu**'il est animé d'un mouvement de rotation sur lui-même.

## Claims

1. A passive cooler for a satellite, comprising a sunscreen (1), a radiator (3) forming the bottom of the sunscreen, **characterized in that** the sunscreen (1) has a base that is elliptical in one plane and a surface generated by the displacement along the said ellipse of a straight line perpendicular to the tangent to the ellipse, this straight line making a constant angle with the plane of the ellipse.

2. The cooler of claim 1, **characterized in that** it further comprises an infrared deflector (5) at the bottom of the sunscreen and a radiator (7) forming the bottom of the deflector.

3. The cooler of claim 2, **characterized in that** the infrared deflector (5) has an elliptical base.

4. The cooler of claim 1, 2 or 3, **characterized in that** the ratio between the major axis and the minor axis of the elliptical base is greater than or equal to 1.1, or even greater than 1.3.

5. The cooler of one of claims 1 to 4, **characterized in that** the sunscreen has radiators on its exterior face.

6. The cooler of one of claims 2 to 5, **characterized in that** radiation incident near the edge of the sunscreen and directed towards the bottom of the sunscreen on the other side thereof does not enter the deflector.

7. The cooler of one of claims 2 to 6, **characterized in that** infrared radiation emitted by the sunscreen and entering the deflector leaves the deflector having been reflected off the wall of the deflector at least once.

8. The cooler of one of claims 1 to 7, **characterized in that** the angle between the axis of the cooler and the wall of the sunscreen is greater than 23.5°.

9. The cooler of one of claims 2 to 8, **characterized in that** the angle between the axis of the cooler and the wall of the deflector is close to 10°.

10. A satellite comprising a cooler according to one of claims 1 to 9.

11. The satellite of claim 10, **characterized in that** it is a geostationary satellite.

12. The satellite of claim 10 or 11, **characterized in that** it spins on itself.

## Patentansprüche

1. Passiver Kühler für einen Satellit mit einer Sonnenblende (1), wobei ein Kühlkörper (3) den Boden der Sonnenblende bildet, **dadurch gekennzeichnet, dass** die Sonnenblende (1) eine elliptische Basis in einer Ebene und eine Fläche aufweist, die durch die Verschiebung entlang der Ellipse einer Geraden lotrecht zur Tangente der Ellipse erzeugt wird, wobei diese Gerade mit der Ebene der Ellipse einen konstanten Winkel bildet.

2. Kühler nach Anspruch 1, **dadurch gekennzeichnet, dass** er außerdem einen Infrarotdeflektor (5) am Boden der Sonnenblende und einen Kühlkörper (7) aufweist, der den Boden des Deflektors bildet.

3. Kühler nach Anspruch 2, **dadurch gekennzeichnet, dass** der Infrarotdeflektor (5) eine elliptische Basis aufweist.

4. Kühler nach Anspruch 1, 2 oder 3, **dadurch gekennzeichnet, dass** das Verhältnis zwischen der großen Achse und der kleinen Achse der elliptischen Basis größer als oder gleich 1,1 und sogar größer als 1,3 ist.

5. Kühler nach einem der Ansprüche 1 bis 4, **dadurch gekennzeichnet, dass** die Sonnenblende auf ihrer Außenseite Kühlkörper aufweist.

6. Kühler nach einem der Ansprüche 2 bis 5, **dadurch gekennzeichnet, dass** ein in der Nähe des Rands der Sonnenblende einfallender und zum Boden der Sonnenblende auf deren anderer Seite gerichteter Strahl nicht in den Deflektor eindringt.

7. Kühler nach einem der Ansprüche 2 bis 6, **dadurch gekennzeichnet, dass** ein Infrarotstrahl, der von der Sonnenblende emittiert wird und in den Deflektor eindringt, aus dem Deflektor nach mindestens einer Reflektion auf der Wand des Deflektors austritt.

8. Kühler nach einem der Ansprüche 1 bis 7, **dadurch gekennzeichnet, dass** der Winkel zwischen der Achse des Kühlers und der Wand der Sonnenblende größer ist als à 23,5°.

9. Kühler nach einem der Ansprüche 2 bis 8, **dadurch gekennzeichnet, dass** der Winkel zwischen der Achse des Kühlers und der Wand des Deflektors nahe 10° ist.

10. Satellit, der einen Kühler nach einem der Ansprüche 1 bis 9 aufweist.

11. Satellit nach Anspruch 10, **dadurch gekennzeichnet, dass** er geostationär ist.

12. Satellit nach Anspruch 10 oder 11, **dadurch gekennzeichnet, dass** er in Drehung um sich selbst angetrieben wird.
